# EUROPÄISCHE PATENTSCHRIFT

(11) **EP 0 802 357 B1**
(45) Veröffentlichungstag und Bekanntmachung des Hinweises auf die Patenterteilung: **02.02.2000**
(21) Anmeldenummer: 96810233.5
(22) Anmeldetag: 15.04.1996
(51) Int. Cl.: F16K 11/07, F16K 31/06

(54) **Elektromagnetisches Ventil**
Electromagnetic valve
Vanne électromagnétique

(43) Veröffentlichungstag der Anmeldung: 22.10.1997
(73) Patentinhaber: Wärtsilä NSD Schweiz AG, 8401 Winterthur (CH)
(72) Erfinder: Wunder, Alfred Franz, 8442 Hettlingen (CH)
(74) Vertreter: Heubeck, Bernhard

(56) Entgegenhaltungen:
- EP-A- 0 570 649
- WO-A-82/01401
- DE-A- 1 614 315
- US-A- 4 250 922
- US-A- 4 364 412

## Beschreibung

Die Erfindung betrifft ein elektromagnetisches Ventil zur Steuerung des Durchflusses eines Druckmediums gemäss dem Oberbegriff des Anspruches 1 und/oder 2. Ein derartiges Ventil ist z.B. aus der EP-A-570 649 bekannt.

Bei direkt gesteuerten Ventilen wird der Ventilschieber mittels eines Kraftmotors oder Elektromagnets in die eine oder andere Stellung verschoben und in der jeweiligen Stellung gehalten. Die für die Erzeugung der für die Verschiebung und Halterung ausreichenden Kraft erforderliche elektrische Energiemenge wird zur Hauptsache in Joule'sche-Wärme umgewandelt, so dass die Einschaltdauer eng begrenzt und in der Regel eine Kühlung der Spule erforderlich ist.

Der Erfindung wie sie in den Ansprüchen gekennzeichnet ist, liegt die Aufgabe zugrunde, ein elektromagnetisches Ventil zu schaffen, bei welchen die genannten Nachteile dadurch behoben sind, dass die jeweils elektrisch erzeugte Stellung des Ventilschiebers durch das Druckmedium bzw. durch ein federelastisches Element aufrechterhalten wird.

Die mit der Erfindung erzielbaren Vorteile bestehen darin, dass die Einschaltdauer verkürzt wird, so dass Schaltzeiten im Bereich von einer Millisekunde und kleiner liegen.

Im folgenden wird die Erfindung anhand der beiliegenden Zeichnungen erläutert.

Es zeigen:
- Fig. 1: Einen Axialschnitt durch eine Ausführungsform eines erfindungsgemässen Ventils in schematischer Darstellung;
- Fig. 2: eine Einzelheit A in Fig. 1 im grösseren Massstab;
- Fig. 3: eine gegenüber der Fig. 1 modifizierte zweite Ausführungsform und
- Fig. 4: eine Modifikation der ersten und zweiten Ausführungsform.

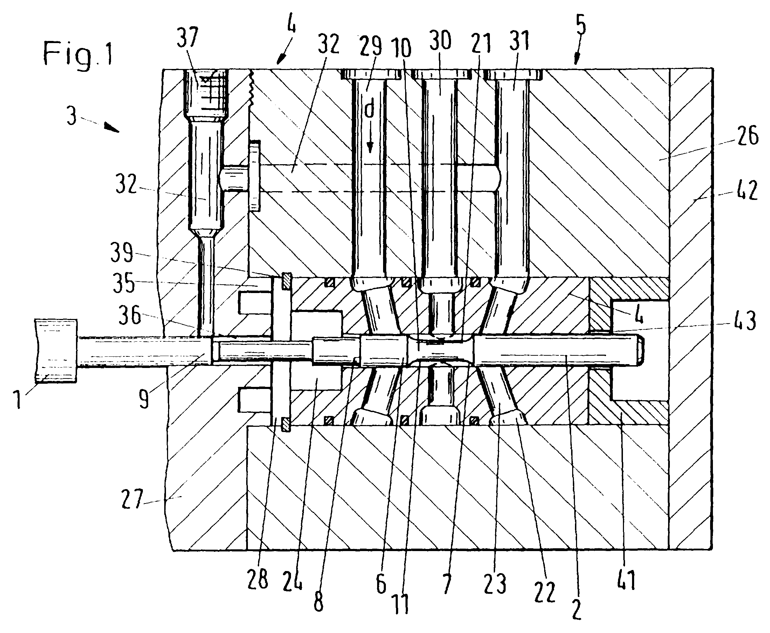

Die Fig. 1 zeigt ein 3/2-Wegeventil. Das Ventil (3) besteht im wesentlichen aus einem Antriebselement 1, einem Ventilschieber 2 und einem Ventilgehäuse 5 mit einem Ventilkörper 4. Das Antriebselement 1 ist ein elektrodynamischer Antrieb wie er in der EP-A-0 570 649 beschrieben ist. Deshalb wird auf eine ausführliche Beschreibung und Darstellung desselben verzichtet.

Der Ventilschieber 2 ist stabförmig mit im wesentlichen rundem Querschnitt und an einem Ende mit dem Antriebselement 1 verbunden. Der Ventilschieber 2 weist zwei Steuerkanten 6, 7, die den Durchfluss des Druckmediums steuern und eine erste und zweite Hilfssteuerkante 8, 9 auf, deren Funktion später erläutert wird.

Zur Ausbildung der zwei Steuerkanten 6, 7 ist ein Abschnitt 10 vorgesehen, der einen gegenüber dem Aussendurchmesser des Ventilschiebers 2 geringeren Aussendurchmesser hat, so dass eine Durchflusskammer 11 mit ringfvrmigem Querschnitt gebildet wird.

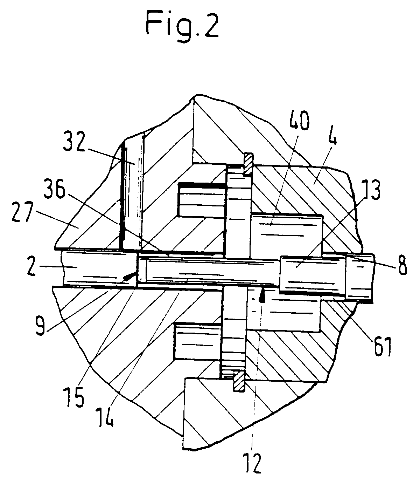

Wie die Fig. 2 zeigt, ist zur Ausbildung der ersten und zweiten Hilfssteuerkante 8, 9 ist ein Abschnitt 12 mit einem reduzierten Querschnitt vorgesehen, der einen runden Abschnitt 13 und einen abgeflachten Abschnitt 14 aufweist. Zusätzlich ist eine Rille 15 angrenzend an der zweiten Hilfssteuerkante 9 im abgeflachten Abschnitt 14 ausgebildet.

Der Ventilkörper 4 ist ein zylindrischer Körper mit einer axialen Durchbohrung 21, in welcher der Ventilschieber 2 verschiebbar ist. In der Mantelfläche des Ventilkörpers 4 sind rinnenförmige Ausnehmungen 22 im Abstand zueinander ausgebildet. Ferner sind im Ventilkörper 4 Bohrungen 23, welche jeweils die Ausnehmungen 22 mit der Durchbohrung 21 verbinden und eine Ausnehmung 24 vorgesehen.

Das Ventilgehäuse 5 weist zwei Teilgehäuse 26, 27 auf, die durch geeignete Verbindungselemente (nicht dargestellt) verbunden sind. Der erste Gehäuseteil 26 weist eine Durchbohrung 28 zur Aufnahme des Ventilkörpers 4, einen Zuführkanal 29, der mit einer Quelle für Druckmedium verbunden werden kann, einen Verbraucherkanal 30 und einen Ablaufkanal 31, der z.B. mit einem Behälter verbunden werden kann sowie einen Abschnitt eines Steuerkanals 32 auf, der ausgehend von einer Stirnseite des ersten Teilgehäuses 26 in den Ablaufkanal 31 mündet.

Das zweite Teilgehäuse 27 weist Mittel (nicht dargestellt) zur Montage des Antriebselementes und der elektrischen Verbindungselemente (nicht dargestellt) auf.

An einer Stirnseite des Teilgehäuses 27 ist ein Ansatz 35 ausgebildet, auf welchem das erste Teilgehäuse 26 angeordnet ist. Im zweiten Teilgehäuse 27 ist eine Bohrung 36 vorgesehen, die koaxial zum Ansatz 35 ausgebildet ist. Im zweiten Teilgehäuse 27 ist ein zweiter Abschnitt des Steuerkanals 32 ausgebildet, welcher den ersten Abschnitt des Steuerkanals 32 mit der Bohrung 36 verbindet. Der zweite Abschnitt des Steuerkanals 32 ist durch einen Verschlussteil 37 abgeschlossen.

Wie die Fig. 1 zeigt, ist der Ventilkörper 4 in der Durchbohrung 28 des ersten Teilgehäuses 26 eingesetzt und liegt an einer Stirnseite an einen Sicherungsring 39 an. Dadurch wird eine Steuerkammer 40 gebildet. An der anderen Stirnseite ist der Ventilkörper 4 an einer Büchse 41 abgestützt, die in die Durchbohrung 28 angeordnet und durch einen Deckel 42 gehalten ist, welcher das erste Teilgehäuse 26 abschliesst. Im Bodenteil der Büchse ist ein Durchgangsloch 43 vorgesehen.

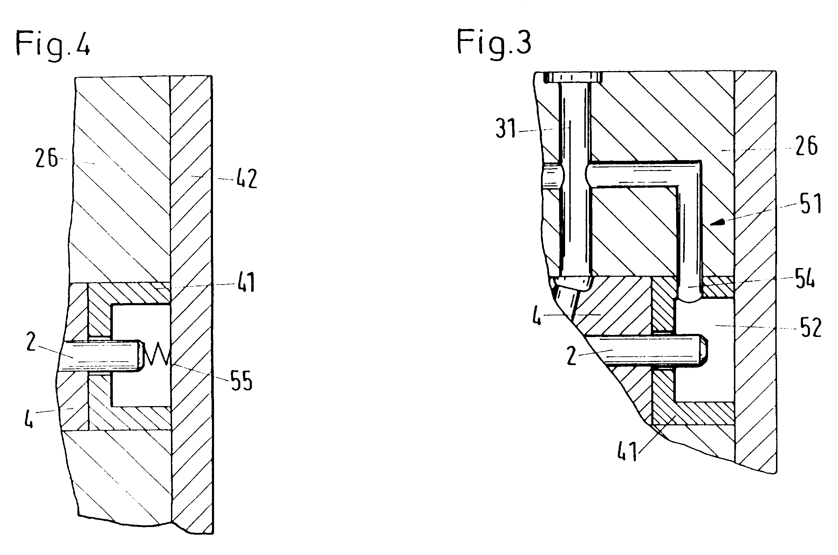

Wie die Fig. 3 zeigt, ist bei dieser Ausführungsform des Ventils ein zweiter Verbindungskanal 51 vorgesehen, der den Ablaufkanal 31 mit einer zweiten Steuerkammer 52 verbindet.

Nachfolgend wird die Funktion des 3/2-Wegeventils beschrieben. Für die Funktion des Ventils ist das Anliegen eines Druckmediums im Zuführkanal 29 erforderlich. Das Ventil 3 hat zwei Schaltstellungen und ist in der Fig. 1 in einer Zwischenstellung dargestellt. Wird das Ventil mittels dem Antriebselement 1 in die Schaltstellung verschoben, so werden der Ablauf- und Verbraucherkanal 30, 31 verbunden. Bei dieser Verschiebung des Ventilschiebers 2 überläuft die zweite Hilfssteuerkante 9 zuerst den Steuerkanal 32 und verschliesst diesen und die erste Hilfssteuerkante 8 überläuft danach die Mündung des Zuführkanals 29, so dass Druckmedium über einen ringförmigen Kanal 61 in die Steuerkammer 40 strömt. Aufgrund der unterschiedlichen Aussendurchmesser des Ventilschiebers 2 und des Abschnittes 13 wird eine Kraft erzeugt, welche den Ventilschieber 2 in der elektrisch erzeugten Schaltstellung hält.

Der elektrische Strom zur Erregung des Antriebselementes kann unmittelbar nach Auftreten der Kraft unterbrochen werden, wodurch die Einschaltdauer in vorteilhafter Weise verkürzt wird.

Wird das Ventil mittels dem Antriebselement 1 in die andere Schaltstellung verschoben, so werden der Zuführ- und der Verbraucherkanal 29, 30 verbunden. Bei dieser Verschiebung überfährt die erste Hilfssteuerkante 8 die Mündung des Zuführkanals 29 und unterbricht die Verbindung zwischen dem Zuführkanal 29 und Steuerkammer 40 während die zweite Hilfssteuerkante 9 die Steuerkammer 40 mit dem Steuerkanal 32 verbindet, so dass das Druckmedium über den Ablaufkanal 31 abströmen kann.

Da in hydraulischen Systemen aus hydraulischen Gründen im Ablauf in der Regel ein gewisser Standdruck herrscht, wirkt dieser über den Kanal 51 die Verbindungsbohrung 54 in der Steuerkammer 52 auf das in diese hineinragende Ende der Ventilspindel 2 und hält diese in der anderen Schaltstellung.

Bei der Ausführungsform gemäss Fig. 4 wird der Ventilschieber 2 mittels der Kraft der Feder 55, welche auf die Stirnfläche des Ventilschiebers 2 einwirkt, in der anderen Schaltstellung gehalten. Daraus ergibt sich der Vorteil einer definierten Schaltstellung für ein druckloses Ventil.

Das Ventil 3 enthält ein elektromagnetisches Antriebselement 1, einen Ventilschieber 2, der mit dem Antriebselement verbunden und in zwei Endstellungen verschiebbar ist, ein Ventilgehäuse 5 mit einem Zuführkanal 29, einen Verbraucherkanal 30, einem Ablaufkanal 31 und einer Steuerkammer 40. Der Ventilschieber verbindet in der ersten Schaltstellung den Verbraucher- und Ablaufkanal und in der zweiten Schaltstellung den Zuführ- und Verbraucherkanal. Am Ventilschieber 2 sind eine erste 8 und eine zweite 9 Hilfssteuerkante vorgesehen. Ein Steuerkanal 32 verbindet den Ablaufkanal 31 und die Steuerkammer 40. In der ersten Endstellung ist der Steuerkanal geschlossen und die Steuerkammer kommuniziert mit dem Zuführkanal 29, um den Ventilschieber mittels Druckmedium in der ersten Schaltstellung zu halten. In der zweiten Schaltstellung ist der Steuerkanal 32 geöffnet und die Durchlaufkammer 11 verbindet den Zuführkanal 29 mit dem Verbraucherkanal 30, wobei der Ventilschieber mittels des in der zweiten Steuerkammer 52 herrschenden Standdruckes in der zweiten Endstellung gehalten wird. Durch die Halterung des Ventilschiebers mittels des Druckmediums wird in vorteilhafterweise die Verlustleistung des Antriebselementes verringert, so dass eine Kühlung desselben nicht erforderlich ist und die Einschaltdauer des Antriebselementes verkürzt wird.

## Patentansprüche

1. Elektromagnetisches Ventil (3) zur Steuerung des Durchflusses eines Druckmediums, mit einem Antriebselement (1), einem Ventilgehäuse (5), mindestens einem Zuführkanal (29) für das Druckmedium und mindestens einem weiteren Kanal (30, 31), die im Ventilgehäuse ausgebildet sind und mit einem Ventilschieber (2), der mit dem Antriebselement (1) verbunden und im Ventilgehäuse axial verschiebbar angeordnet ist, wobei der Ventilschieber in seinen Schaltstellungen die Verbindung zwischen dem Zuführkanal und einem weiteren Kanal (30) herstellt bzw. unterbricht, dadurch gekennzeichnet, dass eine erste (8) und zweite (9) Hilfssteuerkante am Ventilschieber (2) vorgesehen sind und dass eine erste Steuerkammer (40) und ein Steuerkanal (32) im Ventilgehäuse (5) vorgesehen ist, welcher Steuerkanal einen weiteren Kanal (31) und die erste Steuerkammer (40) verbindet, wobei der Steuerkanal in der einen Schaltstellung des Ventilschiebers geschlossen ist und die erste Steuerkammer mit dem Zuführkanal (29) kommuniziert, um den Ventilschieber mittels Druckmedium in der Schaltstellung zu halten und wobei in der zweiten Schaltstellung des Ventilschiebers der Steuerkanal (32) geöffnet und die Verbindung zwischen der ersten Steuerkammer (40) und dem Zuführkanal (29) unterbrochen ist, so dass über einen Hilfskanal (51) ein Standdruck in der zweiten Steuerkammer (52) erzeugt wird, um den Ventilschieber in der zweiten Stellung zu halten.

2. Elektromagnetisches Ventil 3 zur Steuerung des Durchflusses eines Druckmediums, mit einem Antriebselement (1), einem Ventilgehäuse (5), mindestens einem Zuführkanal (29) für das Druckmedium und mindestens einem weiteren Kanal (30, 31), die im Ventilgehäuse ausgebildet sind und mit einem Ventilschieber (2), der mit dem Antriebselement (1) verbunden und im Ventilgehäuse axial verschiebbar angeordnet ist, wobei der Ventilschieber in seinen Schaltstellungen die Verbindung zwischen dem Zuführkanal und einem weiteren Kanal (30) herstellt bzw. unterbricht, dadurch gekennzeichnet, dass eine erste (8) und zweite (9) Hilfssteuerkante am Ventilschieber (2) vorgesehen sind, dass eine erste Steuerkammer (40) und ein Steuerkanal (32) im Ventilgehäuse (5) vorgesehen ist, welcher Steuerkanal einen weiteren Kanal (31) und die erste Steuerkammer (40) verbindet, wobei der Steuerkanal in der einen Schaltstellung des Ventilschiebers geschlossen ist und die erste Steuerkammer mit dem Zuführkanal (29) kommuniziert, um den Ventilschieber mittels Druckmedium in der Schaltstellung zu halten und wobei in der zweiten Schaltstellung des Ventilschiebers der Steuerkanal (32) geöffnet und die Verbindung zwischen der ersten Steuerkammer (40) und dem Zuführkanal (29) unterbrochen ist, und dass ein federelastisches Element (55) in einer zweiten Steuerkammer (52) angeordnet ist, um den Ventilschieber in der zweiten Stellung zu halten.

3. Ventil nach einem der Ansprüche 1 oder 2,
gekennzeichnet durch ein Ventilgehäuse (5), welches den Zuführkanal und den weiteren Kanal (30, 31) und einen Ventilkörper (4) aufweist, der eine axiale Durchbohrung (21) zur Aufnahme des Ventilschiebers (2), ringförmige Ausnehmungen (22), die mit dem Zuführkanal und dem weiteren Kanal (30, 31) kommunizieren und Bohrungen (23) aufweist, derart, dass jede Ausnehmung (22) mit der Durchbohrung (21) verbunden ist.

4. Ventil nach Anspruch 3, dadurch gekennzeichnet, dass ein Steuerkanal (32) vorgesehen ist, der im Ventilgehäuse (5) ausgebildet ist, um den weiteren Kanal (31) mit der ersten Steuerkammer (40) zu verbinden.

5. Ventil nach einem der Ansprüche 1 bis 4, dadurch gekennzeichnet, dass das Ventil ein 3/2-Wegeventil ist und dass das Ventil ein Ventilgehäuse (5) einen Zuführ-, einen Verbraucher- und einen Ablaufkanal (29, 30, 31), die mit dem Ventilschieber (2) in Verbindung stehen sowie einen Steuerkanal (32) aufweist, welche den Ablaufkanal (31) mit der ersten Steuerkammer (40) verbindet.

6. Ventil nach Anspruch 6, dadurch gekennzeichnet, dass der Hilfskanal (51) den Ablaufkanal (31) mit der zweiten Steuerkammer (52) verbindet.

## Claims

1. Electromagnetic valve (3) for controlling the through-flow of a pressure medium, having a drive element (1), a valve housing (5), at least one supply passage (29) for the pressure medium and atl east one further passage (30, 31), which are formed in the valve housing and having a valve slider (2) which is connected to the drive element (1) and is axially displaceably disposed in the valve housing, wherein the valve slider in its switched positions respectively makes or breaks the connection between the supply passage and a further passage (30), characterized in that a first auxiliary control edge (8) and a second auxiliary control edge (9) are provided on the valve slider (2) and in that a first control chamber (40) and a control passage (32) are provided in the valve housing (5), said control passage connecting one further passage (31)and the first control chamber (40), wherein the control chamber is closed in the one switched position of the valve slider and the first control chamber communicates with the supply passage (29), in order to maintain the valve slider in the switched position of the pressure medium and wherein, in the second switched position of the valve slider, the control passage (32) is open and the connection between the first control chamber (40) and the supply passage (29) is interrupted, so that a standing pressure is produced in the second control chamber (52) via an auxiliary passage (51) in order to hold the valve slider in the second position.

2. Electromagnetic valve (3) for controlling the through-flow of a pressure medium, having a drive element (1), a valve housing (5), at least one supply passage (29) for the pressure medium and atl east one further passage (30, 31), which are formed in the valve housing and having a valve slider (2) which is connected to the drive element (1) and is axially displaceably disposed in the valve housing, wherein the valve slider in its switched positions respectively makes or breaks the connection between the supply passage and a further passage (30), characterized in that a first auxiliary control edge (8) and a second auxiliary control edge (9) are provided on the valve slider (2) and in that a first control chamber (40) and a control passage (32) are provided in the valve housing (5), said control passage connecting one further passage (31)and the first control chamber (40), wherein the control chamber is closed in the one switched position of the valve slider and the first control chamber communicates with the supply passage (29), in order to maintain the valve slider in the switched position of the pressure medium and wherein, in the second switched position of the valve slider, the control passage (32) is open and the connection between the first control chamber (40) and the supply passage (29) is interrupted, and in that a resilient element (55) is arranged in a second control chamber (52) in order to keep the valve slider in the second position.

3. Valve in accordance with one of the claims 1 or 2, characterized by a valve housing (5), which has the supply passage and the further passage (30, 31) and a valve body (4), which has an axial through-bore (21) for receiving the valve slider (2), the annular recesses (22), which communicate with the supply passage and the further passage (30, 31) and bores (23) of such a kind that each recess (22) is connected to the through-bore (21).

4. Valve in accordance with claim 3, characterized in that a control passage (32) is provided, which is formed in the valve housing (5) in order to connect the further passage (31) to the first control chamber (40).

5. Valve in accordance with one of the claims 1 to 4, characterized in that the valve is a 3/2 way valve and in that the valve has a valve housing (5), a supply passage, a service passage and a drain passage (29, 39, 31), which communicate with the valve slider (2) and also a control passage (32) which connects the drain passage (31) to the first control chamber (40).

6. Valve in accordance with claim 6, characterized in that the auxiliary passage (51) connects the drain passage (31) to the second control chamber (52).

## Revendications

1. Vanne électromagnétique (3) pour commander le débit d'un milieu sous pression, avec un élément d'entraînement (1), un boîtier de vanne (5), au moins un canal d'amenée (29) pour le milieu sous pression et au moins un canal supplémentaire (30, 31) qui sont réalisés dans le boîtier de vanne et avec un tiroir de vanne (2) qui est relié à l'élément d'entraînement (1) et qui est disposé pour être déplaçable axialement dans le boîtier de vanne, où le tiroir de vanne, dans ses positions de commutation, établit respectivement interrompt la liaison entre le canal d'amenée et un canal supplémentaire (30), caractérisée en ce que sont prévues une première (8) et une deuxième (9) arêtes de commande auxiliaires au tiroir de vanne et en ce qu'il est prévu une première chambre de commande (40) et un canal de commande (32) dans le boîtier de vanne (5), le canal de commande reliant un canal supplémentaire (31) et la première chambre de commande (40), où le canal de commande, dans une position de commutation du tiroir de vanne est fermé, et la première chambre de commande communique avec le canal d'amenée (29), pour maintenir le tiroir de vanne au moyen du milieu sous pression dans la position de commutation, et où dans la deuxième position de commutation du tiroir de vanne, le canal de commande (32) est ouvert et la liaison entre la première chambre de commande (40) et le canal d'amenée (29) est interrompue de manière qu'il est produit par un canal auxiliaire (51) une pression fixe dans la deuxième chambre de commande (52) pour maintenir le tiroir de vanne dans la deuxième position.

2. Vanne électromagnétique (3) pour commander le débit d'un milieu sous pression, avec un élément d'entraînement (1), un boîtier de vanne (5), au moins un canal d'amenée (29) pour le milieu sous pression et au moins un canal supplémentaire (30, 31) qui sont réalisés dans le boîtier de vanne et avec un tiroir de vanne (2) qui est relié à l'élément d'entraînement (1) et qui est disposé d'une manière axialement déplaçable dans le boîtier de vanne, où le tiroir de vanne, dans ses positions de commutation établit respectivement interrompt la liaison entre le canal d'amenée et un canal supplémentaire (30), caractérisée en ce que sont prévues une première (8) et une deuxième (9) arêtes de commande auxiliaires au tiroir de vanne (2), qu'il est prévu une première chambre de commande (40) et un canal de commande (32) dans le boîtier de vanne (5), ledit canal de commande reliant un canal supplémentaire (31) et la première chambre de commande (40), où le canal de commande est fermé dans une position de commutation du tiroir de vanne et la première chambre de commande communique avec le canal d'amenée (29) pour maintenir le tiroir de vanne au moyen du milieu sous pression dans la position de commutation, et où dans la seconde position de commutation du tiroir de vanne, le canal de commande (32) est ouvert et la liaison entre la première chambre de commande (40) et le canal d'amenée (29) est interrompue, et en ce qu'un élément (55) ayant une élasticité de ressort est disposé dans une deuxième chambre de commande (52) pour maintenir le tiroir de vanne dans la deuxième position.

3. Vanne selon l'une des revendications 1 ou 2, caractérisée par un boîtier de vanne (5) qui présente le canal d'amenée et le canal supplémentaire (30, 31) et un corps de vanne (4), qui présente un perçage axial (21) pour la réception du tiroir de vanne (2), des évidements annulaires (22) qui communiquent avec le canal d'amenée et le canal supplémentaire (30, 31) et des perçages (33), de manière que chaque évidement (22) est relié au perçage (21).

4. Vanne selon la revendication 3, caractérisée en ce qu'il est prévu un canal de commande (32) qui est réalisé dans le boîtier de vanne (5) pour relier le canal supplémentaire (31) à la première chambre de commande (40).

5. Vanne selon l'une des revendications 1 à 4, caractérisée en ce que la vanne est une vanne à 3/2 voies et que la vanne présente un boîtier de vanne (5), un canal d'amenée, d'usager et d'écoulement (29, 30, 31) qui sont en liaison avec le tiroir de vanne (2) ainsi qu'un canal de commande (32) qui relie le canal d'écoulement (31) à la première chambre de commande (40).

6. Vanne selon la revendication 6, caractérisée en ce que le canal auxiliaire (51) relie le canal d'écoulement (31) à la deuxième chambre de commande (52).
